# FASCICULE DE BREVET EUROPEEN

(11) **EP 2 251 236 B1**
(45) Date de publication et mention de la délivrance du brevet: **18.07.2012**
(21) Numéro de dépôt: 10161944.3
(22) Date de dépôt: 05.05.2010
(51) Int. Cl.: B60T 17/06, B60T 11/26, B60T 17/18, B60T 17/22

(54) **Réservoir de liquide de frein et installation pour la fabrication d'un tel réservoir**
Bremsflüssigkeitsbehälter und Anlage zur Herstellung eines solchen Behälters
Brake fluid reservoir and manufacturing device thereof

(30) Priorité: 15.05.2009 FR 0902382
(43) Date de publication de la demande: 17.11.2010
(73) Titulaire: Robert Bosch GmbH, 70442 Stuttgart (DE)
(72) Inventeur: Lenczner, Sylvain, 77450 ESBLY (FR); L'Aot, Jean-Michel, 93240 STAINS (FR); Maury, Vincent, 92600 ASNIERES SUR SEINE (FR); Albarran, Miguel Angel, 75011 PARIS (FR)
(74) Mandataire: Hurwic, Aleksander Wiktor

(56) Documents cités:
- WO-A1-98/10966
- DE-A1- 10 217 619
- DE-A1-102006 010 815
- FR-A1- 2 645 815
- GB-A- 2 204 997
- US-A- 4 297 846
- US-A1- 2006 016 484

## Description

### Domaine de l'invention

La présente invention concerne un réservoir de liquide de frein et installation pour la fabrication d'un tel réservoir.

L'invention concerne un réservoir de liquide de frein combiné à un maître-cylindre tandem, comportant un puits de détection, étanche au moins dans la plage de déplacement du flotteur installé dans le puits pour surveiller le niveau du liquide de frein dans le réservoir et générer un signal,
- le réservoir étant formé de deux parties, une partie supérieure et une partie inférieure, munies chacune de cloisons et d'éléments de puits, qui, lorsque les deux parties sont assemblées, constituent les compartiments et le puits de détection,
- les deux parties étant chacune en matière plastique thermosoudable pour être assemblées l'une à l'autre par thermosoudage des parois et des cloisons compartimentant le réservoir, avec compression des bords préalablement fondus.

L'invention concerne également une installation de thermosoudage pour la réalisation d'un réservoir de liquide de frein, réservoir constitué par l'assemblage par thermosoudage des parois et cloisons des parties du réservoir, réalisées par injection en matière plastique thermosoudable, installation comportant un support pour recevoir la partie supérieure du réservoir, un support pour recevoir la partie inférieure du réservoir, ces deux supports étant face à face et un miroir chauffant destiné à être placé entre les deux parties de réservoir de façon à pouvoir appliquer les bords des parois et cloisons des deux parties de réservoir contre le miroir pour faire fondre partiellement le bord des deux parties de réservoir, puis extraire le miroir chauffant de cet intervalle et presser l'une contre l'autre les deux parties du réservoir pour les souder par thermosoudage.

### Etat de la technique

Les réservoirs de liquide de frein du type défini ci-dessus existent. L'assemblage par thermosoudage des deux parties du réservoir génère une bavure de soudure. Or cette bavure qui n'est pas gênante sur les parois du réservoir et sur les cloisons compartimentant celui-ci, peut l'être au niveau du puits de détection logeant le flotteur. Une bavure à l'intérieur du puits peut bloquer ou gêner le déplacement du flotteur. Le flotteur mis en place dans le puits du réservoir avant le soudage peut également être détérioré par sa proximité avec le miroir chauffant. On peut avoir outre, une bavure de matière plastique au niveau de la soudure, également un fil de matière plastique qui vient à l'intérieur du puits et gêne le mouvement du flotteur.

En conclusion dans les réservoirs de liquide de frein, connus, il y a un risque de mauvais fonctionnement du flotteur ou d'une modification de son comportement à l'intérieur du puits, par exemple lorsque le véhicule est incliné et que de ce fait, le flotteur s'appuie contre la paroi du puits de détection. De tels réservoirs sont connus dans le document GB 2 204 997 A.

### But de l'invention

La présente invention a pour but de développer un réservoir de liquide de frein réalisé par l'assemblage de deux parties de réservoir évitant tout risque de modification du comportement du flotteur de détection du niveau de liquide de frein dans le puits de détection. L'invention a également pour but de développer une installation de thermosoudage pour la réalisation d'un tel réservoir.

### Exposé et avantages de l'invention

A cet effet, l'invention concerne un réservoir de liquide de frein du type défini ci-dessus caractérisé en ce que
- les parois et les cloisons sont assemblées par thermosoudage bords à bords à l'exclusion des bords des éléments de puits,
- le bord de l'élément supérieur et le bord de l'élément inférieur du puits ont une forme complémentaire, produisant par l'assemblage sous la pression exercée par la réunion et le soudage des parois et des cloisons du réservoir, une jonction étanche des bords des deux éléments de puits, sans générer de saillies déformées vers l'intérieur du puits.

Le réservoir selon l'invention a l'avantage d'éviter toute partie en saillie à l'intérieur du puits de détection qui pourrait freiner, bloquer ou, plus généralement, déranger le fonctionnement du flotteur, sans que cette forme particulière de l'invention ne complique la réalisation du réservoir au moment du thermosoudage.

Outre le risque de bavure ou de partie en saillie à l'intérieur du réservoir, le non-soudage des bords des éléments formant le puits évite également qu'il se crée un fil de produit fondu venant dans le puits et risquant de gêner le fonctionnement du flotteur.

Suivant une autre caractéristique avantageuse, le bord d'un élément (supérieur/inférieur) du puits comporte une lèvre et le bord de l'autre élément du puits a une surface de guidage coopérant avec la lèvre dont l'écrasement réalise le contact étanche avec le cas échéant, déformation de la lèvre vers l'extérieur du puits de détection.

Cette combinaison de formes entre la lèvre et le bord de l'autre élément qui peut être droit ou incliné peut s'inverser dans ce dispositif, la lèvre étant prévue soit sur l'élément supérieur soit sur l'élément inférieur et le bord plat ou incliné sur l'autre élément.

Suivant une autre caractéristique avantageuse, le bord d'un élément (supérieur/inférieur) du puits comporte une lèvre intérieure (extérieure) et le bord de l'autre élément du puits comporte une lèvre extérieure (intérieure) de section au moins sensiblement complémentaire de celle du bord supérieur de façon que l'assemblage sous pression des deux bords réalise le contact étanche.

On réalise ainsi un emboîtement et là encore, la lèvre intérieure peut être prévue sur l'élément supérieur ou l'élément inférieur et la lèvre extérieure sur l'autre élément.

Suivant une autre caractéristique, l'élément supérieur et l'élément inférieur du puits de détection ont une hauteur qui, en combinaison est supérieure à la hauteur des parois et des cloisons à souder.

L'invention concerne également une installation pour thermosouder deux parties de réservoir de liquide de frein. Cette installation peut être intégrée à l'installation de moulage des deux parties ou être une installation indépendante. Cette installation est caractérisée en ce que le miroir comporte un dégagement au niveau de la trace des éléments de puits pour laisser hors contact le bord des éléments du puits lorsque le bord des parois et celui des cloisons de chacune des parties de réservoir est appliqué contre une face du miroir.

Outre le fait que cette installation ne chauffe que les bords des parois extérieures et des cloisons des parties du réservoir, l'évidement dans le miroir évite de chauffer par rayonnement le flotteur du détecteur de niveau, installé dans l'élément supérieur du puits avant l'assemblage des deux parties. On évite ainsi toute déformation du flotteur risquant de gêner sont fonctionnement.

### Dessins

La présente invention sera décrite ci-après de manière plus détaillée à l'aide de modes de réalisation représentés dans les dessins annexés après rappel du mode de réalisation connu.

Dans ces dessins :
- la figure 1A est une coupe verticale d'un réservoir de liquide de frein selon l'état de la technique,
- les figures 1B, 1C montrent schématiquement des étapes caractéristiques du procédé d'assemblage du réservoir,
- la figure 2 montre une vue en plan d'une partie de réservoir de liquide de frein selon l'invention,
- la figure 3A montre en coupe verticale, un réservoir de liquide de frein selon l'invention,
- les figures 3B, 3C montrent les étapes caractéristiques de fabrication du réservoir :

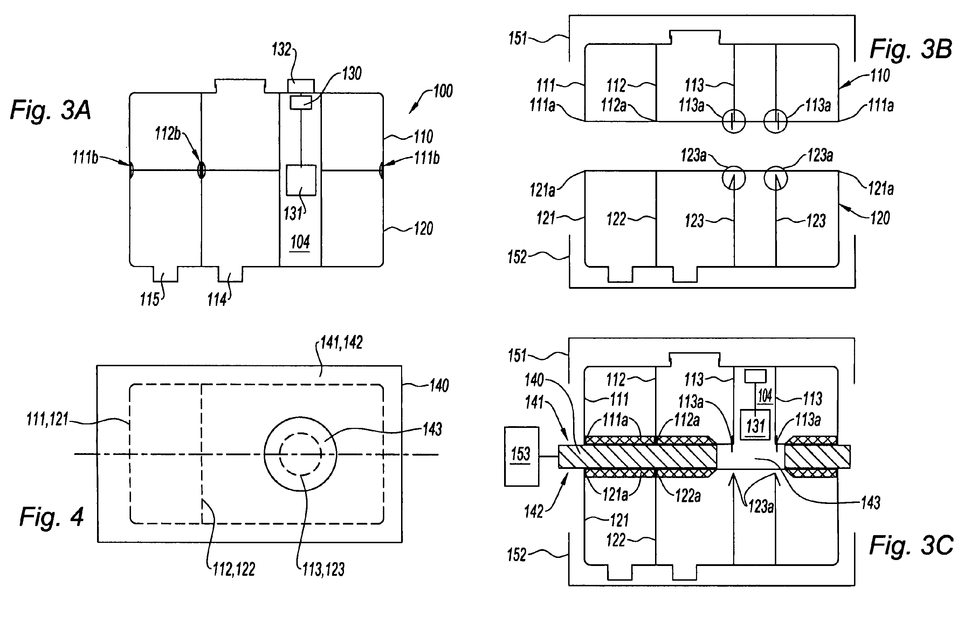

   * la figure 3B montre le dégagement du miroir chauffant,
   * la figure 3C montre l'assemblage des deux parties de réservoir,
- la figure 4 est une vue en plan du miroir chauffant et de la trace de contact d'une partie de réservoir avec une face du miroir chauffant,

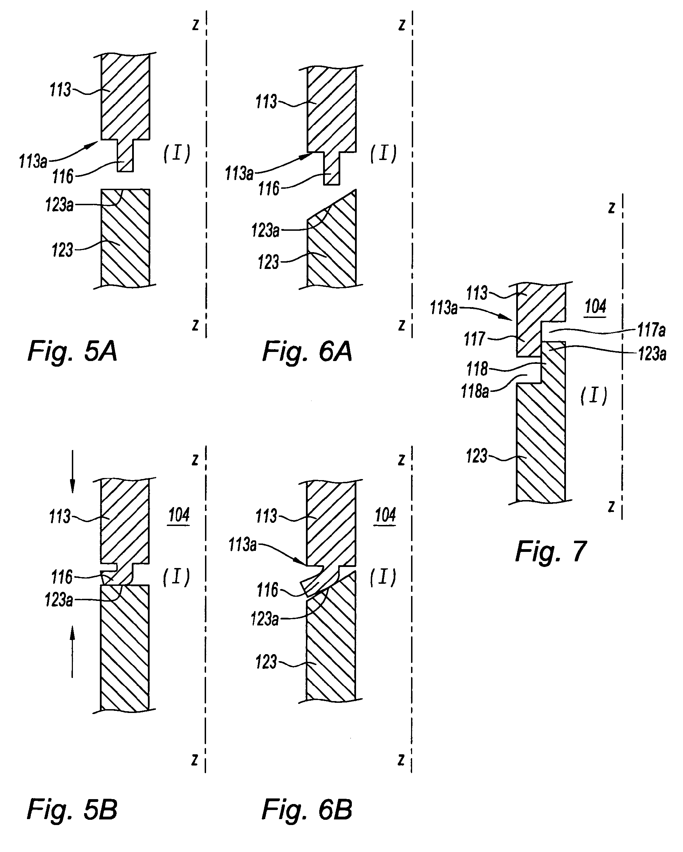

- les figures 5A, 5B montrent une forme de bord des éléments de puits de détection avant assemblage du réservoir et après assemblage,
- les figures 6A, 6B montrent une autre forme de bord des éléments de puits de détection avant assemblage du réservoir et après assemblage du réservoir,
- la figure 7 montre une autre variante de forme de bord des éléments de puits de détection.

### Description de modes de réalisation de l'invention

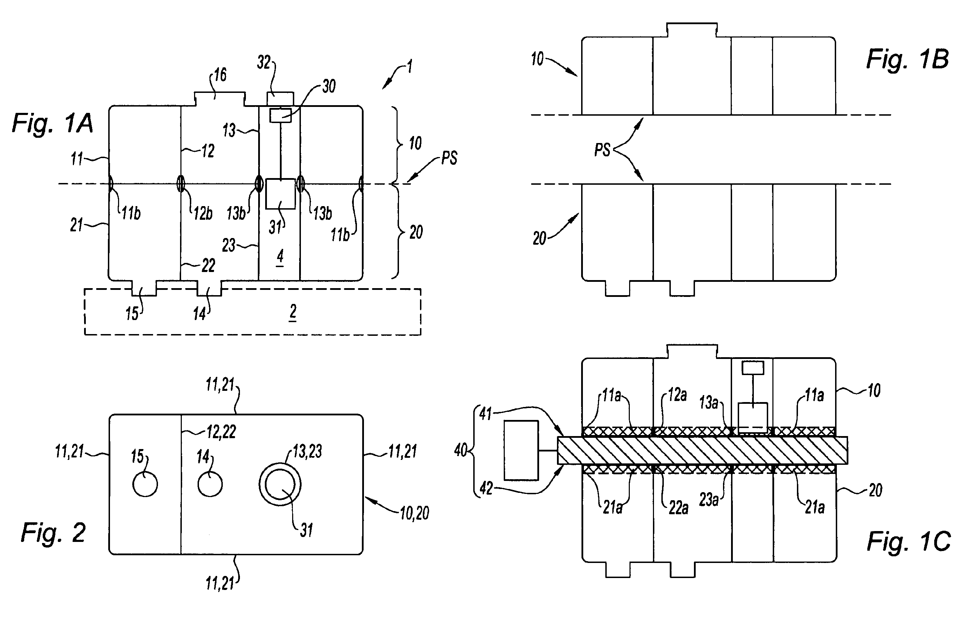

Pour faciliter la compréhension de l'invention il sera tout d'abord fait un rappel du procédé d'assemblage d'un réservoir selon l'état de la technique représenté aux figures 1A-1C.

La figure 1A montre un réservoir de liquide de frein 1 combiné à un maître-cylindre tandem 2 représenté très schématiquement par son contour. Le réservoir 1 est formé de deux parties en matière thermosoudable, une partie supérieure 10 et une partie inférieure 20. Ces deux parties 10, 20 ont des parois extérieures 11, 21, des cloisons 12, 22 et des éléments de puits de détection 13, 23, homologues, qui sont assemblés par thermofusion suivant le plan de jonction PS.

Le réservoir 1 est relié au maître-cylindre tandem 2 par les deux embouts de sortie 14, 15 associés respectivement à la chambre primaire et à la chambre secondaire du maître-cylindre tandem 2. Le réservoir 1 se remplit par l'ajutage 16.

Le réservoir 1 comporte un puits de détection 4 formé par l'assemblage des deux éléments de puits 13, 23 appartenant respectivement aux parties 11 et 21. Il loge un capteur de niveau 30 muni d'un flotteur 31.

Les principales étapes du procédé de fabrication du réservoir 1, connu, seront décrites ci-après :
Selon la figure 1B, on réalise par injection, les deux parties 10, 20 qui seront ensuite assemblées par une soudure bout à bout des bords des parois, cloisons et éléments de puits.

Pour cela on applique simultanément chacune des deux parties 10, 20 contre les deux faces 41, 42 d'un miroir chauffant 40 de façon à produire la fusion du bord 11a, 21a, 12a, 22a, 13a, 23a, des parois, cloisons et éléments de puits. (figure 1C). La bande soulignée par les hachures croisées schématise la zone de matière fondue aux bords des parois, cloisons et des éléments de puits des deux parties 10, 20 du réservoir. Le miroir chauffant 40 est une plaque chauffante revêtue de PTFE ou autre matière anti-adhérente.

Puis, lorsque la matière plastique des bords est à l'état fondu, on écarte les deux parties 10, 20, on dégage le miroir chauffant 40 et on presse l'une contre l'autre des deux parties 10, 20 pour les réunir. Ce soudage se traduit par un écrasement des bords en contact, générant des bavures 11b, 12b, 13b. Les bavures 11b, 12b des parois extérieures 11, 21 et des cloisons 12, 22 ne sont pas gênantes pour le fonctionnement du réservoir. Mais au niveau des éléments formant le puits de détection 4, les bavures 13b dans le puits constituent une zone d'accrochage pour le flotteur 31 du détecteur de niveau 30 logé de manière mobile dans le puits 4. Ces bavures sont susceptibles de gêner le comportement du flotteur qui risque de générer des signaux erronés. Les bavures sont représentées à la figure 1A par des renflements 11b, 12b, 13b sur le réservoir 1 terminé.

Le capteur de niveau 30 est d'abord installé dans l'élément de puits 13 de la partie supérieure 10 de sorte qu'il sera emprisonné dans le puits de détection une fois le réservoir 1 soudé. Le capteur 30 est relié à un connecteur extérieur 32 et il fonctionne, en général, comme un interrupteur. Le capteur de niveau peut aussi être installé dans la partie inférieure 20 si l'on utilise un interrupteur à lame souple (encore appelé interrupteur ILS) à détection magnétique et, dans ce cas, le flotteur porte un aimant.

La figure 2 est une vue en plan très simplifiée d'une partie du réservoir 1, soit la partie supérieure 10, soit la partie inférieure 20 puisque ces deux parties ont, au moins dans le plan de jonction PS, une trace identique pour les parois 11, 21, les cloisons 12, 22 et les éléments 13, 23 formant le puits de détection. La partie de réservoir 10, 20 selon la figure 2 a une section rectangulaire avec deux grands côtés et deux petits côtés de la paroi 11, 21 ainsi que les cloisons transversales 12, 22 ; l'élément 13, 23 de puits de détection est de forme cylindrique de section circulaire.

Un mode de réalisation de réservoir 100 selon l'invention est représenté aux figures 3A-3C.

Selon la figure 3A, le réservoir 100 se compose de deux parties, une partie supérieure 110 et une partie inférieure 120 assemblées l'une à l'autre par thermosoudage. La forme globale du réservoir et de ses parties constitutives 110, 120 est analogue à celle du réservoir 1 de la figure 1A. Il comporte deux embouts de sortie 114, 115 reliés aux deux entrées de la chambre primaire et de la chambre secondaire du maître-cylindre tandem. Il a également un puits de détection de niveau 104 logeant un capteur de niveau 130 avec son flotteur 131 et relié à un connecteur extérieur 132.

Les figures 3B, 3C montrent schématiquement les étapes principales d'assemblage des deux parties de réservoir de liquide de frein selon l'invention.

Selon la figure 3B, on réalise par injection les deux parties 110, 120 du réservoir 100 avec les parois 111, 121, les cloisons 112, 122 et les éléments de puits 113, 123.

Les bords 111a, 121a ; 112a, 122a des côtés 111, 121 et des cloisons 113, 123 sont destinés à être réunis les uns aux autres sauf les bords 113a, 123a des éléments 113, 123 formant le puits de détection 104. Ces bords sont mis en évidence par un petit cercle.

Les bords 113a, 123a des éléments 113, 123 ont une structure complémentaire qui, par assemblage sous la pression exercée par les parois et les cloisons 111, 121 ; 113, 123, une fois réunis, réalise une jonction étanche des deux éléments formant le puits de détection 104.

Des exemples de bords de formes complémentaires seront examinés ultérieurement.

La mise en compression des deux bords 113a, 123a des éléments 113, 123 est réalisée sans que ces bords 113a, 123a ne soient mis à l'état fondu alors que les bords 111a, 121a ; 112a, 122a sont fondus pour être thermosoudés.

La compression des parties 110, 120 pour leur thermosoudage produit un tassement des bords fondus 111a, 121a ; 112a, 122a alors que les bords 113a, 123a, non fondus, restent rigides et se compriment l'un contre l'autre.

Selon le cas, il peut être intéressant de donner une surlongueur à l'un des deux éléments 113, 123 par rapport à la longueur (ou hauteur) des parois et cloisons 111, 121 ; 112, 122 définissant le plan de jonction PJ.

Si nécessaire, le dépassement est tel que la hauteur totale des deux éléments 113, 123 formant le puits de détection 104 est supérieure à la somme des hauteurs de deux parties de réservoir 110, 120 après assemblage. Schématiquement, ce dépassement de hauteur peut être prévu pour l'un des deux éléments 113, 123 mais aussi pour les deux éléments qui peuvent dépasser du plan de jonction des parois et des cloisons dans le but d'avoir une hauteur totale après soudage qui soit supérieure à la hauteur totale des parois et cloisons pour que le bord des éléments 113, 123 formant le puits de détection, soit en compression après soudage des bords des deux parties de boîtier 110, 120.

De façon générale, la section des bords de forme complémentaire des deux éléments 113, 123 formant par combinaison le puits de détection 104 est telle que sous l'effet de la compression, ces deux bords se déforment éventuellement vers l'extérieur du puits mais sans former de bourrelet ou autre partie en saillie qui viendrait dans le puits de détection 104.

Le procédé de réalisation du réservoir 100 selon l'invention sera décrit ci-après à l'aide des figures 3B, 3C.

Selon la figure 3B, on installe les deux parties 110, 120 dans des supports 151, 152 d'une installation de thermosoudage. Ces supports peuvent aussi être des éléments du moule d'injection ayant servi à réaliser les parties 110, 120 pour mettre face à face les deux parties 110, 120 du réservoir préalablement fabriquées par injection-moulage de matière plastique. Puis, on introduit le miroir chauffant 140 dans l'intervalle et on applique le bord 111a, 121a; 112a, 122a des parois et des cloisons contre les deux faces 141, 142 du miroir chauffant 140 pour produire la fusion des bords 111a, 121a ; 112a, 122a sans faire fondre les bords 113a, 123a des éléments de puits 113, 123.

Selon l'invention, le miroir chauffant 140 dont les faces sont par exemple revêtues de PTFE, comporte un dégagement ou découpe 143 à l'emplacement des deux éléments 113, 123 formant le puits de détection. Ce dégagement 143 est de dimensions suffisantes pour que le bord des éléments de puits ne soit pas fondu par le miroir 140.

Après fusion des seuls bords l1a, 112a; 121a, 122a des parois et cloisons, on écarte légèrement les deux parties 110, 120 par rapport aux faces 141, 142 du miroir chauffant 140 pour permettre d'extraire le miroir chauffant.

Ensuite, on presse les bords des parois et cloisons 111a, 121a ; 112a, 122a des deux parties 110, 120 les uns contre les autres pour les souder par thermosoudage. Les bords 113a, 123a non ramollis et toujours rigides des deux éléments 113, 123 formant le puits de détection sont, du fait du tassement des autres bords, pressés l'un contre l'autre sans soudure, mais de façon à réaliser un appui étanche par compression. Cet appui ne produit pas de déformation des bords 113a, 123a vers l'intérieur du puits de détection.

Les bandes à hachures croisées montrent les bords fondus 111a, 121a; 112a, 121a alors que les bords 113a, 123a ne sont pas en contact avec le miroir 140 et en sont suffisamment éloignés pour ne pas être chauffés et ramollis.

Les bourrelets de soudure 111b, 112b sont indiqués à la figure 3A.

La figure 4 est une vue en plan du miroir 140 avec son dégagement 143 constitué par un trou et le tracé en pointillés des lignes d'appui des parties 110, 120 du réservoir sur les faces 141, 142 du miroir 140.

L'installation de thermosoudage comporte, outre le miroir chauffant 140, un support 151, 152 pour chaque partie 110, 120 de réservoir, pour les tenir, les écarter ou les rapprocher ainsi qu'un support 153 pour le miroir chauffant 140.

Les figures 5A, 5B montrent une première réalisation de la section des bords 113a, 123a des éléments de puits 113, 123 avec une forme complémentaire. Le bord 113a a une lèvre 116 et l'autre bord 123a a une surface plane. Lorsque les bords sont rapprochés (figure 5B), la lèvre 116 s'écrase et s'appuie contre le bord plat 123 de l'autre élément pour réaliser un contact étanche.

La longueur de cette lèvre est telle que quelle que soit sa déformation, elle ne déborde pas vers l'intérieur (I) du puits de détection 104 dont l'axe est schématisé par la ligne ZZ.

Les figures 6A, 6B montrent une seconde réalisation de la section de formes complémentaires des bords 113a, 123a des éléments 113, 123. Dans cette forme de réalisation, l'élément 113 a une lèvre 116 au niveau de son bord 113a comme dans le premier mode de réalisation mais le bord 123a de l'autre élément 123 est incliné vers l'extérieur de sorte qu'après compression (figure 6B), la lèvre 16 se déforme et ne peut que se diriger vers l'extérieur, mais suivant sa longueur, il y a dépassement vers l'extérieur. L'intérieur du puits 104 est indiqué par la lettre (I) et son axe par ZZ.

La troisième réalisation est représentée à la figure 7 en cours d'assemblage par compression. L'élément 113 comporte une lèvre droite 117 au niveau de son bord 113a, cette lèvre étant située du côté extérieur ; du côté intérieur, elle comporte un décrochement 117a. De façon complémentaire, l'élément 123 comporte, au niveau de son bord 123a, une lèvre 118 située à l'intérieur et un dégagement 119a, côté extérieur pour recevoir la lèvre 117 et réciproquement la lèvre 118 vient dans le dégagement 11a. Les positions des lèvres intérieures (extérieures) des deux éléments 113, 123 peuvent également être inversées.

D'autres formes qui, combinées par pression, réalisent une étanchéité sans déborder vers l'intérieur (I) du puits de détection sont envisageables. Dans tous les cas, on réalise une étanchéité par un contact de pièces mises en compression et formant une sorte de joint labyrinthe.

### NOMENCLATURE

- 1: Réservoir connu
- 2: Maître-cylindre tandem
- 4: Puits
- 10, 20: Parties supérieure et inférieure
- 11, 21: Parois extérieures
- 11a, 21a: Bords des parois
- 12, 22: Cloisons
- 12a, 22a: Bords des cloisons
- 13, 23: Eléments de puits de détection
- 13a, 23a: Bords des éléments de puits
- 11, 12b, 13b: Bavures
- 14, 15: Embouts de sortie
- 16: Ajutage
- 30: Capteur de niveau
- 31: Flotteur
- 32: Connecteur
- 40: Miroir chauffant
- 41, 42: Faces du miroir 40
- 100: Réservoir selon l'invention
- 104: Puits
- 110, 120: parties supérieure et inférieure
- 111, 121: Parois extérieures
- 111a, 121a: Bords
- 112, 122: Cloisons
- 113, 123: Eléments du puits de détection
- 114, 115: Embouts de sortie
- 117, 118: Lèvres
- 140: Miroir chauffant
- 141, 142: Faces du miroir chauffant
- 151, 152: Supports
- 153: Support du miroir chauffant
- PJ: Plan de jonction
- I: Intérieur du puits de détection

## Revendications

1. Réservoir de liquide de frein combiné à un maître-cylindre tandem, comportant un puits de détection, étanche au moins dans la plage de déplacement du flotteur installé dans le puits pour surveiller le niveau du liquide de frein dans le réservoir et générer un signal,
- le réservoir étant formé de deux parties, une partie supérieure et une partie inférieure, munies chacune de cloisons et d'éléments de puits, qui, lorsque les deux parties sont assemblées, constituent les compartiments et le puits de détection,
- les deux parties étant chacune en matière plastique thermosoudable pour être assemblées l'une à l'autre par thermosoudage des parois et des cloisons compartimentant le réservoir, avec compression des bords préalablement fondus,
**caractérisé en ce que**
- les parois (111, 121) et les cloisons (112, 122) sont assemblées par thermosoudage bords à bords à l'exclusion des bords (113a, 123a) des éléments de puits (113, 123),
- le bord (113a) de l'élément supérieur (113) et le bord (123a) de l'élément inférieur (123) du puits (104) comporte une lèvre (116) et le bord de l'autre élément (123, 113) du puits a une surface de guidage (123a) coopérant avec la lèvre (116) dont l'écrasement réalise le contact étanche avec le cas échéant, déformation de la lèvre vers l'extérieur du puits de détection (104) réalisant une jonction étanche des bords des deux éléments du puits, sans générer de saillies vers l'intérieur du puits produit par l'assemblage sous la pression exercée par la réunion et le soudage des parois (111, 121) du réservoir (100).

2. Réservoir de liquide de frein selon la revendication 1,
**caractérisé en ce que**
le bord d'un élément (supérieur/inférieur) (113, 123) du puits (104) comporte une lèvre (117) intérieure (118) (extérieure) et le bord de l'autre élément (123, 113) du puits comporte une lèvre extérieure (intérieure) de section au moins sensiblement complémentaire de celle du bord supérieur de façon que l'assemblage sous pression des deux bords réalise le contact étanche.

3. Réservoir de liquide de frein selon la revendication 1,
**caractérisé en ce que**
l'élément supérieur (113) et l'élément inférieur (123) du puits de détection ont une hauteur qui, en combinaison est supérieure à la hauteur des parois (111, 121) et des cloisons (112, 122) à souder.

4. Installation de thermosoudage pour la réalisation d'un réservoir de liquide de frein selon l'une quelconque des revendications 1 à 3,
réservoir constitué par l'assemblage par thermosoudage des parois et cloisons des parties (110, 120) du réservoir, réalisées par injection en matière plastique thermosoudable,
installation comportant un support pour recevoir la partie supérieure du réservoir, un support pour recevoir la partie inférieure du réservoir, ces deux supports étant face à face et un miroir chauffant destiné à être placé entre les deux parties de réservoir de façon à pouvoir appliquer les bords des parois et cloisons des deux parties de réservoir contre le miroir pour faire fondre partiellement le bord des deux parties de réservoir, puis extraire le miroir chauffant de cet intervalle et presser l'une contre l'autre les deux parties du réservoir pour les souder par thermosoudage, **caractérisée ce que**
le miroir (140) comporte un dégagement (143) au niveau de la trace des éléments (113, 123) de puits pour laisser hors contact le bord (113a, 123a) des éléments du puits lorsque le bord (111 a, 121 a) des parois (111, 121) et celui (112a, 122a) des cloisons (112, 122) de chacune des parties de réservoir (110, 120) est appliqué contre une face (141, 142) du miroir.

## Claims

1. Brake fluid reservoir combined with a tandem master cylinder, comprising a gauging well, that is fluid-tight at least in the range in which the float installed in the well for monitoring the brake fluid level in the reservoir and for generating a signal moves,
- the reservoir being formed of two parts, an upper part and a lower part, these each being provided with partitions and well elements which, when the two parts are assembled, make up the compartments and the gauging well,
- the two parts each being made of a thermoweldable plastic so that they can be assembled with one another by thermowelding the walls and partitions that compartmentalize the reservoir, by pressing together edges that have been melted beforehand,
**characterized in that**
- the walls (111, 121) and the partitions (112, 122) are assembled by thermowelding the edges together with the exception of the edges (113a, 123a) of the well elements (113, 123),
- the edge (113a) of the upper element (113) or the edge (123a) of the lower element (123) of the well (104) comprises a lip (116) and the edge of the other element (123, 113) of the well has a guide surface (123a) collaborating with the lip (116) the compression of which achieves fluid-tight contact with, as appropriate, deformation of the lip toward the exterior of the gauging well (104) achieving a fluid-tight joint between the edges of the two elements of the well, without generating any projections toward the interior of the well produced by the assembly under the pressure exerted by the bringing-together and welding of the walls (111, 121) of the reservoir (100).

2. Brake fluid reservoir according to Claim 1,
**characterized in that**
the edge of one (upper/lower) element (113, 123) of the well (104) has an inner (117) (outer (118)) lip and the edge of the other element (123, 113) of the well has an outer (inner) lip of a cross section that at least substantially complements that of the upper edge so that assembling the two edges under pressure achieves the fluid-tight contact.

3. Brake fluid reservoir according to Claim 1,
**characterized in that**
the upper element (113) and the lower element (123) of the gauging well have a height which, in combination, exceeds the height of the walls (111, 121) and of the partitions (112, 122) to be welded.

4. Thermowelding installation for creating a brake fluid reservoir according to any one of Claims 1 to 3, which reservoir is formed by using thermowelding to assemble the walls and partitions of the parts (110, 120) of the reservoir, which thermowelding is achieved by injecting thermoweldable plastic,
the installation comprising a support to accept the upper part of the reservoir, a support to accept the lower part of the reservoir, these two supports facing one another, and a hotplate intended to be positioned between the two reservoir parts so that the edges of the walls and partitions of the two reservoir parts can be pressed against the hotplate in order to cause the edge of the two reservoir parts to melt partially, then the hotplate can be extracted from this gap and the two parts of the reservoir pressed together in order to weld them by thermowelding,
**characterized in that**
the hotplate (140) has a cut-out (143) along the line of the well elements (113, 123) so as to leave the edge (113a, 123a) of the well elements out of contact when the edge (111a, 121a) of the walls (111, 121) and that (112a, 122a) of the partitions (112, 122) of each of the reservoir parts (110, 120) is pressed against one face (141, 142) of the hotplate.

## Patentansprüche

1. Bremsflüssigkeitsbehälter, der mit einem Tandem-Hauptzylinder kombiniert ist und einen Erfassungsschacht aufweist, der zumindest im Verlagerungsbereich des Schwimmers dicht ist, welcher zur Überwachung des Bremsflüssigkeitsstands im Behälter und zur Erzeugung eines Signals im Schacht angeordnet ist,
- wobei der Behälter aus zwei Teilen, einem oberen Teil und einem unteren Teil, besteht, die jeweils mit Trennwänden und Schachtelementen versehen sind, die die Kammern und den Erfassungsschacht bilden, wenn die beiden Teile zusammengefügt sind,
- die beiden Teile jeweils aus warmschweißbarem Kunststoffmaterial bestehen, um durch Warmschweißen der Wände und Trennwände, die den Behälter unterteilen, aneinandergefügt zu werden, wobei die zuvor geschmolzenen Ränder zusammengedrückt werden,
**dadurch gekennzeichnet, dass**
- die Wände (111, 121) und Trennwände (112, 122) durch Warmschweißen Rand an Rand aneinandergefügt werden, mit Ausnahme der Ränder (113a, 123a) der Schachtelemente (113, 123),
- der Rand (113a) des oberen Elements (113) oder der Rand (123a) des unteren Elements (123) des Schachts (104) eine Lippe (116) aufweist und der Rand des anderen Elements (123, 113) des Schachts eine Führungsfläche (123a) aufweist, die mit der Lippe (116) zusammenwirkt, deren Komprimierung den dichten Kontakt bildet, gegebenenfalls mit einer Verformung der Lippe zum Äußeren des Erfassungsschachts (104) hin, die eine dichte Verbindung der Ränder der beiden Schachtelemente realisiert, ohne Vorsprünge zum Inneren des Schachts zu bilden, die durch das Zusammenfügen unter dem durch das Verbinden und das Schweißen der Wände (111, 121) des Behälters (100) ausgeübten Druck erzeugt werden.

2. Bremsflüssigkeitsbehälter nach Anspruch 1,
**dadurch gekennzeichnet, dass**
der Rand eines (oberen/unteren) Elements (113, 123) des Schachts (104) eine innere (äußere) Lippe (117, 118) und der Rand des anderen Elements (123, 113) des Schachts eine äußere (innere) Lippe aufweist, deren Querschnitt zumindest im Wesentlichen komplementär zu dem des oberen Rands ist, so dass das Zusammenfügen der beiden Ränder unter Druck den dichten Kontakt bildet.

3. Bremsflüssigkeitsbehälter nach Anspruch 1,
**dadurch gekennzeichnet, dass**
das obere Element (113) und das untere Element (123) des Erfassungsschachts eine Höhe haben, die in Kombination größer ist als die Höhe der zu schweißenden Wände (111, 121) und Trennwände (112, 122).

4. Vorrichtung zum Warmschweißen zur Herstellung eines Bremsflüssigkeitsbehälters nach einem der Ansprüche 1 bis 3,
wobei der Behälter durch Zusammenfügen der Wände und Trennwände der Teile (110, 120) des Behälters durch Warmschweißen hergestellt ist, die durch Spritzgießen aus warmschweißbarem Kunststoff gebildet sind,
wobei die Vorrichtung einen Träger zur Aufnahme des oberen Teils des Behälters, einen Träger zur Aufnahme des unteren Teils des Behälters, wobei diese beiden Träger einander gegenüberliegen, und einen Heizspiegel aufweist, der dazu vorgesehen ist, zwischen den beiden Teilen des Behälters angeordnet zu sein, so dass die Ränder der Wände und Trennwände der beiden Teile des Behälters gegen den Spiegel gedrückt werden können, um den Rand der beiden Teile des Behälters teilweise zu schmelzen und anschließend den Heizspiegel aus diesem Zwischenraum zu entnehmen und die beiden Teile des Behälters gegeneinanderzudrücken, um sie durch Warmschweißen zu schweißen,
**dadurch gekennzeichnet, dass**
der Spiegel (140) auf Höhe der Bahn der Schachtelemente (113, 123) eine Aussparung (143) aufweist, um den Rand (113a, 123a) der Schachtelemente außer Kontakt zu lassen, wenn der Rand (111 a, 121 a) der Wände (111, 121) und der Rand (112a, 122a) der Trennwände (112, 122) jedes Behälterteils (110, 120) gegen eine Fläche (141, 142) des Spiegels gedrückt sind.
